# EUROPÄISCHE PATENTSCHRIFT

(11) **EP 0 901 241 B1**
(45) Veröffentlichungstag und Bekanntmachung des Hinweises auf die Patenterteilung: **28.01.2009**
(21) Anmeldenummer: 98115852.0
(22) Anmeldetag: 21.08.1998
(51) Int. Cl.: H04B 7/26

(54) **Digitale Telekommunikationseinrichtung mit Mobilteil und TDMA Verfahren**
Digital mobile telecommunications system with mobile terminal and TDMA method
Système de télécommunication mobile numérique avec terminal mobile et procédé AMRT

(30) Priorität: 08.09.1997 DE 19739226
(43) Veröffentlichungstag der Anmeldung: 10.03.1999
(73) Patentinhaber: Infineon Technologies AG, 81669 München (DE)
(72) Erfinder: Heinen, Stefan, Dr., 47802 Krefeld (DE); Kranz, Christian, Dr., 40885 Ratingen-Lintorf (DE)
(74) Vertreter: Jannig, Peter

(56) Entgegenhaltungen:
- EP-A- 0 333 679
- EP-A- 0 587 225
- WO-A-96/21998
- GB-A- 2 321 160
- US-A- 5 604 744
- IIZUKA M: "Design of common access channels for TDMA-TDD microcell communications systems" VEHICULAR TECHNOLOGY CONFERENCE, 1994 IEEE 44TH STOCKHOLM, SWEDEN 8-10 JUNE 1994, NEW YORK, NY, USA,IEEE, 8. Juni 1994 (1994-06-08), Seiten 1180-1183, XP010123262 ISBN: 0-7803-1927-3

## Beschreibung

Die vorliegende Erfindung betrifft eine Vorrichtung gemäß dem Oberbegriff des Patentanspruchs 1, d.h. eine digitale Telekommunikationseinrichtung mit einem oder mehreren schnurlosen Mobilteilen.

Eine derartige Telekommunikationseinrichtung ist beispielsweise ein nach dem DECT-Standard arbeitendes Funksystem.

Diese Telekommunicationseinrichtungen sind in EP 0 587 225 und in GB 2 294 845 beschrieben.

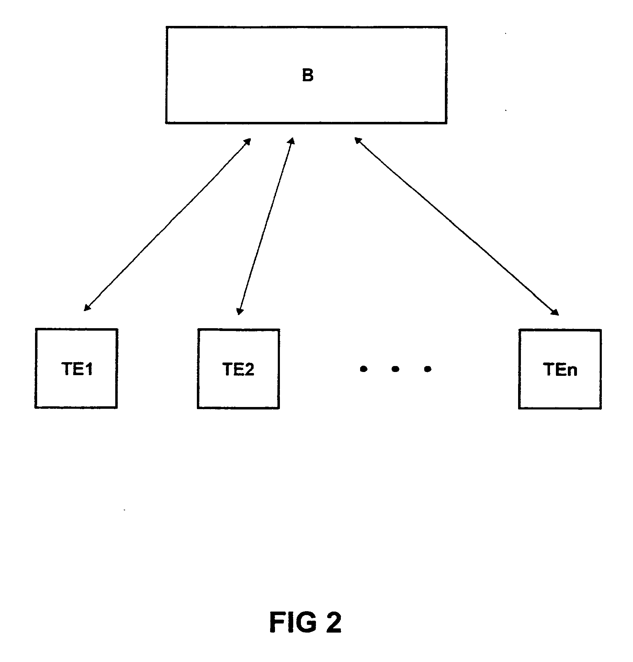

Der prinzipielle Aufbau eines solchen Funksystems ist in Figur 2 veranschaulicht.

Das in der Figur 2 gezeigte System besteht aus einer Basisstation B und mehreren schnurlosen Telekommunikationsendeinrichtungen TE1 bis TEn. Die schnurlosen Telekommunikationsendeinrichtungen TE1 bis TEn sind im betrachteten Beispiel Mobiltelefone, welche in der Lage sind, über Funk mit der Basisstation B zu kommunizieren.

Anstelle der schnurlosen Telekommunikationsendeinrichtungen TE1 bis TEn oder zusätzlich zu diesen können auch schnurlose Anschlußdosen zum Anschluß schnurgebundener Telekommunikationsendeinrichtungen zum Einsatz kommen. Die schnurlosen Telekommunikationsendeinrichtungen, die schnurlosen Anschlußdosen und vergleichbare Einrichtungen sind die eingangs bereits erwähnten Mobilteile.

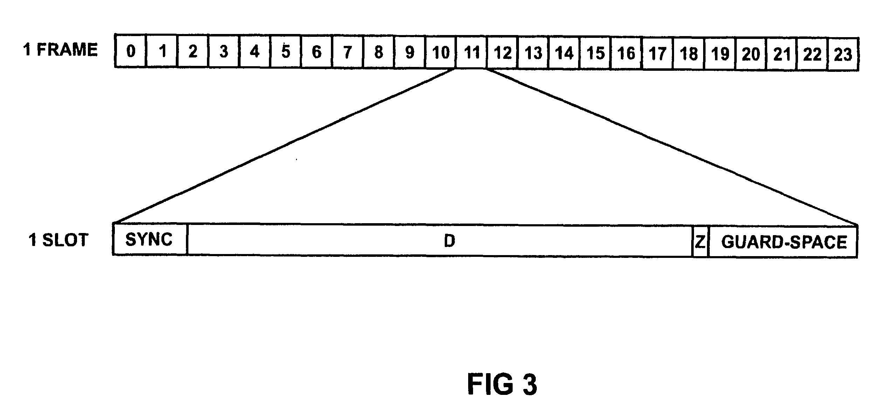

Die Datenübertragung zwischen der Basisstation B und den Mobilteilen erfolgt in Einheiten von sogenannten Frames, genauer gesagt TDMA-Frames, wobei TDMA für Time Division Multiple Access steht und besagt, daß die Frames so aufgebaut sind, daß die Basisstation in aufeinanderfolgenden Zeitschlitzen (den sogenannte time slots bzw. slots) eines jeweiligen Frames der Reihe nach mit allen bei ihr eingebuchten Mobilteilen kommunizieren kann, und dies dann jeweils unter Ausnutzung der vollen Bandbreite des Übertragungskanals. Das TDMA-Verfahren ist hinlänglich bekannt und bedarf keiner weiteren Erläuterung. Der prinzipielle Aufbau eines zur Durchführung des TDMA-Verfahrens geeigneten (TDMA-)Frame wird nachfolgend anhand der Figur 3 erläutert.

Wie aus der Figur 3 ersichtlich ist, setzt sich ein solcher Frame, genauer gesagt der hier betrachtete DECT-Full-Slot-Frame aus 24 identisch langen Zeitschlitzen bzw. Slots (Full-Slots) zusammen. Die ersten 12 der 24 Slots werden von der Basisstation zu den Mobilteilen übertragen, und die sich daran anschließenden zweiten 12 Slots werden von den Mobilteilen zur Basisstation übertragen. Genauer gesagt werden der nullte Slot eines jedem Frame von der Basisstation zu einem nullten Mobilteil, der erste Slot von der Basisstation zu einem ersten Mobilteil, der zweite Slot von der Basisstation zu einem zweiten Mobilteil, ..., der elfte Slot von der Basisstation zu einem elften Mobilteil, und umgekehrt der zwölfte Slot vom nullten Mobilteil zur Basisstation, der dreizehnte Slot vom ersten Mobilteil zur Basisstation, der vierzehnte Slot vom zweiten Mobilteil zur Basisstation, ... und der dreiundzwanzigste Slot vom elften Mobilteil zur Basisstation übertragen.

Ein Frame bzw. die 24 Slots eines Frames werden innerhalb von 10 ms übertragen. Jeder Slot umfaßt 480 Bits wird in rund 417 µs (in 416,66 µs) übertragen. Wie in der Figur 3 angedeutet ist, verteilen sich die 480 Bis auf ein 32 Bits breites Sync-Feld, ein 388 Bits breites D-Feld, ein 4 Bits breites Z-Feld, und ein 56 Bits breites Guard-Space-Feld.

Für die Übertragung der eigentlich interessierenden Nutzdaten (beispielsweise Sprachdaten) sind 320 Bits innerhalb des D-Feldes reserviert. Die Basisstation kann also innerhalb von 10 ms 320 Bits umfassende Nutzdaten zu jedem der Mobilteile versenden und die gleiche Menge an Nutzdaten von jedem der Mobilteile empfangen; die Übertragungsrate für Nutzdaten zwischen der Basisstation und jedem der Mobilteile beträgt also 32 kBit/s in jede Richtung.

Der DECT-Standard ermöglicht damit die Realisierung von qualitativ hochwertigen und flexibel einsetzbaren Systemen. Allerdings können der DECT-Standard, aber auch andere Standards oder Pseudo-Standards nicht immer und überall zum Einsatz kommen. Insbesondere weil in den verschiedenen Sendefrequenzbereichen (Frequenzbändern), in welchen solche Funksysteme betrieben werden dürfen, in der Regel individuelle behördliche Vorschriften beachtet werden müssen, bedarf es zur Nutzung neu freigegebener Frequenzbänder in den allermeisten Fällen der Entwicklung und Realisierung gänzlich neuer Funksysteme.

Dies ist mit einem erheblichen technischen Aufwand verbunden, und zwar vor allem in der Entwicklung der benötigten elektronischen Bauteile, denn die hierbei insbesondere zum Einsatz kommenden integrierten Schaltungen sind nicht oder jedenfalls nicht ohne weiteres in verschiedenartig arbeitenden Funksystemen einsetzbar.

Der vorliegenden Erfindung liegt daher die Aufgabe zugrunde, eine Telekommunikationseinrichtung gemäß dem Oberbegriff des Patentanspruchs 1 zu schaffen, die selbst bei Auslegung für veränderte technische Anforderungen relativ einfach aus herkömmlichen Telekommunikationseinrichtungen erhalten werden kann.

Diese Aufgabe wird erfindungsgemäß durch die im kennzeichnenden Teil des Patentanspruchs 1 beanspruchten Merkmale gelöst.

Demnach ist vorgesehen, daß die Mobilteile und/oder die Basisstation, mit welcher diese in Verbindung stehen oder treten können, dazu ausgelegt sind, die untereinander auszutauschenden Daten in Einheiten von zwei oder mehreren TDMA-Frames handzuhaben.

Das Vorsehen dieses Merkmals schafft die Voraussetzung dafür, daß die zwischen den Mobilteilen und der Basisstation auszutauschenden Daten im wesentlichen wie bei herkömmlichen Systemen, wo die Kommunikation in Einheiten von einzelnen Frames erfolgt, gehandhabt werden können. Dies gilt insbesondere dann, wenn gleichzeitig der Umfang der einzelnen Frames, d.h. die Anzahl der von diesen umfaßten Zeitschlitze bzw. Slots so modifiziert wird, daß die Anzahl der Slots, die die mehreren als Einheit behandelten Frames insgesamt umfassen, gleich der Anzahl der Slots eines herkömmlich verwendeten (Einzel-)Frame ist.

Eine veränderte Anzahl von Slots pro Frame ermöglicht es bei unveränderter Übertragungsdauer pro Frame, die pro Zeiteinheit zu übertragende Datenmenge zu reduzieren, was sich ersichtlich in einer verringerten Bandbreite des Übertragungskanals niederschlägt.

Daß die Übertragungsdauer eines Frame unabhängig von der Anzahl der von diesem umfaßten Slots gleich bleibt, kann dabei durch eine entsprechende Umstellung des (Bit-)Taktes, mit welchem die einzelnen Bits eines Slots versandt oder empfangen werden, erreicht werden.

Im Ergebnis bedeutet dies, daß es die Handhabung mehrerer, umfangsmäßig reduzierter Frames als eine zusammenhängende Einheit auf besonders einfache Weise ermöglicht, die Bandbreite des Übertragungskanals zu verändern und/oder die Telekommunikationseinrichtung in sonstiger Weise an die individuellen Erfordernisse anzupassen; insbesondere kann dabei der gesamte NF-Teil der Telekommunikationseinrichtung im wesentlichen unverändert von herkömmlichen Telekommunikationseinrichtungen übernommen werden.

Eine so arbeitende bzw. betriebene Telekommunikationseinrichtung kann dadurch trotz deren Auslegung für veränderte technische Anforderungen relativ einfach aus herkömmlichen Telekommunikationseinrichtungen erhalten werden.

Vorteilhafte Weiterbildungen der Erfindung sind Gegenstand der Unteransprüche.

Die Erfindung wird nachfolgend anhand eines Ausführungsbeispiels unter Bezugnahme auf die Zeichnung näher erläutert. Es zeigen
- Figur 1: das Format der Daten, die zwischen einer Basisstation und mit dieser kommunizierenden Telekommunikationsendeinrichtungen einer erfindungsgemäßen Telekommunikationseinrichtung ausgetauscht werden,
- Figur 2: den Aufbau eines nach dem DECT-Standard arbeitenden Funksystems, und
- Figur 3: das Format der Daten, die zwischen einer Basisstation und mit dieser kommunizierenden Telekommunikationsendeinrichtungen eines nach dem DECT-Standard arbeitenden herkömmlichen Funksystems ausgetauscht werden.

Die im folgenden näher beschriebene Telekommunikationseinrichtung ist wie ein nach dem DECT-Standard arbeitendes System eine digitale Telekommunikationseinrichtung mit einem oder mehreren schnurlosen Mobilteilen; sie ist allerdings zur Verwendung im sogenannten 2,4 GHz ISM-Band ausgelegt, welches sich von 2400 bis 2483,5 MHz erstreckt und von der FCC (Federal Communication Commision der U.S.A.) unter bestimmten Voraussetzungen für den Betrieb derartiger Telekommunikationseinrichtungen freigegeben wurde.

Es sei bereits an dieser Stelle darauf hingewiesen, daß die erfindungsgemäße Telekommunikationseinrichtung nicht nur zur Verwendung im 2,4 GHz ISM-Band geeignet ist, sondern auch in beliebigen anderen Frequenzbändern zum Einsatz kommen kann.

Die Kommunikation zwischen den Mobilteilen und der Basisstation möge über zwischen diesen versandte und empfangene TDMA-Frames erfolgen.

Die TDMA-Frames weisen im betrachteten Beispiel den selben grundsätzlichen Aufbau auf wie die Frames, die in nach dem DECT-Standard arbeitenden Systemen zum Einsatz kommen. Hierauf besteht jedoch keine Einschränkung. Bei den verwendeten Frames kann es sich auch um bei beliebigen anderen Systemen zum Einsatz kommende TDMA-Frames handeln.

Unterschiedlich zu herkömmlichen Systemen einschließlich der nach dem DECT-Standard arbeitenden Systeme ist jedoch, daß die Mobilteile und/oder die Basisstation dazu ausgelegt sind, die untereinander auszutauschenden Daten in Einheiten von zwei oder mehreren TDMA-Frames handzuhaben.

Die besagten Einheiten umfassen im betrachteten Beispiel je zwei Frames. Hierauf besteht jedoch keine Einschränkung; die Einheiten können grundsätzlich aus beliebig vielen mehreren Frames bestehen.

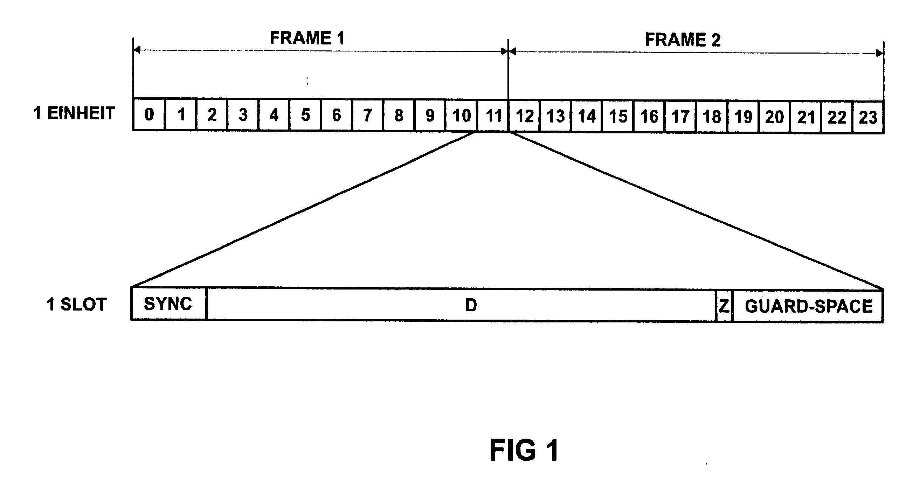

Der Aufbau einer aus zwei Frames bestehenden Einheit ist in Figur 1 veranschaulicht.

Wie aus der Figur 1 ersichtlich ist, besteht die dort gezeigte Einheit aus einem ersten Frame (FRAME 1) und einem sich unmittelbar daran anschließenden zweiten Frame (FRAME 2). Jeder der besagten Frames umfaßt 12 gleich lange Slots. Die insgesamt 24 Slots der beiden Frames sind der Übersichtlichkeit halber durchgehend von 0 bis 23 numeriert, wobei die Slots 0 bis 11 die Slots des ersten Frame, und die Slots 12 bis 23 die Slots des zweiten Frame sind. Die jeweils ersten sechs Slots eines jeden Frame werden von der Basisstation zu den Mobilteilen übertragen, und die sich jeweils daran anschließenden zweiten sechs Slots werden von den Mobilteilen zur Basisstationen übertragen. Genauer gesagt werden der nullte Slot eines jeden Frame (also die Slots 0 und 12) von der Basisstation zu einem nullten Mobilteil, der erste Slot eines jeden Frame (also die Slots 1 und 13) von der Basisstation zu einem ersten Mobilteil, der zweite Slot eines jeden Frame (also die Slots 2 und 14) von der Basisstation zu einem zweiten Mobilteil, ..., der fünfte Slot eines jeden Frame (also die Slots 5 und 17) von der Basisstation zu einem fünften Mobilteil, und umgekehrt der sechste Slot eines jeden Frame (also die Slots 6 und 18) vom nullten Mobilteil zur Basisstation, der siebte Slot eines jeden Frame (also die Slots 7 und 19) vom ersten Mobilteil zur Basisstation, der achte Slot eines jeden Frame (also die Slots 8 und 20) vom zweiten Mobilteil zur Basisstation, ... und der elfte Slot eines jeden Frame (also die Slots 11 und 23) vom fünften Mobilteil zur Basisstation übertragen.

Sofern bei der beschriebenen Telekommunikationseinrichtung sogenannte slow-hopping-Funkteile zum Einsatz kommen, halbiert sich die Anzahl der an einer Basisstation betreibbaren Mobilteile, weil dann nur jeder zweite Slot zur Datenübertragung verwendet werden kann; die restlichen Slots sind die sogenannten Blind Slots, die für die Synchronisation oder Nachregelung der Sende- und/oder Empfangsfrequenz-Oszillatoren der Basisstation und/oder der Mobilteile reserviert sind. Dies ist übrigens auch bei nach dem DECT-Standard arbeitenden Systemen der Fall.

Unabhängig davon weist jeder der zu einer Einheit zusammengefaßten Frames einen Aufbau auf, der vollständig dem des eingangs unter Bezugnahme auf Figur 3 beschriebenen DECT-Frame entspricht. Unterschiedlich ist nur die Anzahl von Slots pro Frame. Dieser Unterschied verschwindet jedoch, wenn man wie in der Figur 1 veranschaulicht jeweils mehrere (im betrachteten Beispiel zwei) einzelne Frames zu einem Doppel- bzw. Mehrfachframe zusammenfaßt. Dann können sowohl der DECT-Frame als auch der neuartige Mehrfachframe gleich viele (24) Slots aufweisen.

Ein Frame bzw. die 12 Slots eines Frames werden innerhalb von 10 ms übertragen. Jeder Slot umfaßt 480 Bits wird in rund 833 µs (in 833,33 µs) übertragen. Wie in der Figur 1 angedeutet ist, verteilen sich die 480 Bis auf ein 32 Bits breites Sync-Feld, ein 388 Bits breites D-Feld, ein 4 Bits breites Z-Feld, und ein 56 Bits breites Guard-Space-Feld.

Der Aufbau der Doppelframe-Slots gemäß Figur 1 stimmt also vollständig mit dem Aufbau der DECT-Frame-Slots gemäß Figur 3 überein. Zwar ist die Zeit, innerhalb welcher ein Slot übertragen wird, unterschiedlich groß, aber vom Aufbau und der Zusammenstellung her ist der Doppelframe gemäß Figur 1 identisch mit dem DECT-Frame gemäß Figur 3, wodurch diese im wesentlichen vollkommen gleich gehandhabt werden können; insbesondere kann der im DECT-System zum Einsatz kommende Basisband-Chip unverändert oder allenfalls geringfügig modifiziert zum Einsatz kommen.

Die langsamere Übertragung der zu übertragenden Daten wird vorzugsweise dadurch veranlaßt, daß ein die Übertragungsgeschwindigkeit bestimmender Bit-Takt entsprechend modifiziert wird, wobei die Modifikation im betrachteten Beispiel in einer Halbierung der Bit-Takt-Frequenz besteht. Diese Halbierung wird vorzugsweise durch Einfügen eines entsprechenden Teilers in den Bit-Takt-Generator bewerkstelligt.

Für die Übertragung der eigentlich interessierenden Nutzdaten (beispielsweise Sprachdaten) sind 320 Bits innerhalb des D-Feldes reserviert. Die Basisstation kann also innerhalb von 10 ms 320 Bits umfassende Nutzdaten zu jedem der Mobilteile versenden und die gleiche Menge an Nutzdaten von jedem der Mobilteile empfangen; die Übertragungsrate für Nutzdaten zwischen der Basisstation und jedem der Mobilteile beträgt also 32 kBit/s in jede Richtung.

Auch insoweit herrscht Übereinstimmung zwischen der erfindungsgemäßen Telekommunikationseinrichtung und der nach dem DECT-Standard arbeitenden Telekommunikationseinrichtung.

Nicht nur der Basisband-Chip, sondern der gesamte NF(Niederfrequenz)-Teil der erfindungsgemäßen Telekommunikationseinrichtung kann daher nahezu unverändert von herkömmlichen Telekommunikationseinrichtungen übernommen werden.

Der HF(Hochfrequenz)-Teil der erfindungsgemäßen Telekommunikationseinrichtung, durch welchen eine oder mehrere durch den Übertragungskanal bestimmte Trägerfrequenzen entsprechend den zu übertragenden Daten moduliert werden bzw. die übertragenen Daten durch Demodulation wiedergewonnen werden, unterscheidet sich aufgrund der unterschiedlichen Trägerfrequenzen naturgemäß von den HF-Teilen herkömmlicher Telekommunikationseinrichtungen. Der HF-Teil der erfindungsgemäßen Telekommunikationseinrichtung muß daher modifiziert, d.h. auf die neuen Frequenzen angepaßt werden, was aber bei verschiedenen Übertragungskanälen unvermeidlich ist. Der Aufwand wird jedoch durch die Synergieeffekte reduziert.

Die wie vorstehend erläutert aufgebaute und arbeitende Telekommunikationseinrichtung benötigt aufgrund der verringerten Datenübertragungsrate eine geringere Bandbreite zur Datenübertragung. Die wie beschrieben erfolgte Verringerung der Bandbreite reicht aus, um die Anforderungen zu erfüllen, die diesbezüglich an Telekommunikationseinrichtungen für das 2,4 GHz ISM-Band gestellt werden.

Auf die vorstehend beschriebene Art und Weise kann eine nach dem DECT-Standard arbeitende oder eine andere Telekommunikationseinrichtung unter Vornahme von nur relativ geringfügigen und/oder einfachen Modifikationen in eine für das 2,4 GHz ISM-Band ausgelegte Telekommunikationseinrichtung verwandelt werden.

Die beschriebene Telekommunikationseinrichtung kann damit trotz deren Auslegung für veränderte technische Anforderungen relativ einfach aus herkömmlichen Telekommunikationseinrichtungen erhalten werden.

## Patentansprüche

1. Digitale Telekommunikationseinrichtung mit einer Basisstation und mehreren schnurlosen Mobilteilen, die mit dieser Basisstation in Verbindung stehen oder treten können, wobei die Mobilteile und/oder die Basisstation dazu ausgelegt sind, die untereinander auszutauschenden Daten in Einheiten von zwei oder mehreren TDMA-Frames handzuhaben, und wobei die TDMA-Frames so aufgebaut sind, daß die Basisstation in aufeinanderfolgenden Slots eines jeweiligen TDMA-Frame der Reihe nach mit allen mit ihr in Verbindung stehenden Mobilteilen kommunizieren kann,
**dadurch gekennzeichnet,**
- **daß** die Telekommunikationseinrichtung eine nicht nach dem DECT-Standard arbeitende Telekommunikationseinrichtung ist, und
- **daß** die Anzahl der Slots, die die als Einheit gehandhabte Anzahl von TDMA-Frames insgesamt umfaßt, der Anzahl der Slots entspricht, die ein einzelner Frame eines nach dem DECT-Standard arbeitenden Systems umfaßt.

2. Telekommunikationseinrichtung nach Anspruch 1,
**dadurch gekennzeichnet,**
**daß** diese auf einer Modifikation einer Telekommunikationseinrichtung basiert, bei welcher die untereinander auszutauschenden Daten in Einheiten von einzelnen TDMA-Frames gehandhabt werden.

3. Telekommunikationseinrichtung nach Anspruch 2,
**dadurch gekennzeichnet,**
**daß** die Telekommunikationseinrichtung, auf welcher diese basiert, eine nach dem DECT-Standard arbeitende Telekommunikationseinrichtung ist.

4. Telekommunikationseinrichtung nach Anspruch 3,
**dadurch gekennzeichnet,**
**daß** als Basisband-Chip der Telekommunikationseinrichtung der Basisband-Chip einer nach dem DECT-Standard arbeitenden Telekommunikationseinrichtung verwendet wird.

5. Telekommunikationseinrichtung nach einem der vorhergehenden Ansprüche,
**dadurch gekennzeichnet,**
**daß** die Anzahl der Slots, die die als Einheit gehandhabte Anzahl von TDMA-Frames insgesamt umfaßt, eine von der Anzahl der als Einheit gehandhabten TDMA-Frames unabhängige Konstante ist.

6. Telekommunikationseinrichtung nach einem der vorhergehenden Ansprüche,
**dadurch gekennzeichnet,**
**daß** der Aufbau und der Umfang der Slots unabhängig von der Anzahl der als Einheit gehandhabten TDMA-Frames ist.

7. Telekommunikationseinrichtung nach einem der vorhergehenden Ansprüche,
**dadurch gekennzeichnet,**
**daß** die Zeit, innerhalb welcher ein TDMA-Frame übertragen wird, unabhängig von der Anzahl der als Einheit gehandhabten TDMA-Frames ist.

8. Telekommunikationseinrichtung nach einem der vorhergehenden Ansprüche,
**dadurch gekennzeichnet,**
**daß** ein Frequenzteiler vorgesehen ist, durch welchen die Frequenz eines die Übertragungsgeschwindigkeit bestimmenden Bittaktes geteilt wird.

9. Telekommunikationseinrichtung nach einem der vorhergehenden Ansprüche,
**dadurch gekennzeichnet,**
**daß** diese für den Einsatz im 2,4 GHz ISM-Band ausgelegt ist.

## Claims

1. Digital telecommunications device having a base station and a plurality of cordless mobile parts which are or can be connected to this base station, with the mobile parts and/or the base station being designed to handle the data to be interchanged between them in units of two or more TDMA frames, and with the TDMA frames being configured such that the base station can communicate with all of the mobile parts which are connected to it in successive slots of a respective TDMA frame, in sequence,
**characterized**
- **in that** the telecommunications device is a telecommunications device which does not operate in accordance with the DECT Standard, and
- **in that** the number of slots which the number of TDMA frames handled as a unit comprises in total corresponds to the number of slots formed by a single frame in a system which operates in accordance with the DECT Standard.

2. Telecommunications device according to Claim 1,
**characterized in that**
this device is based on a modification of a telecommunications device in which the data to be interchanged is handled in units of individual TDMA frames.

3. Telecommunications device according to Claim 2,
**characterized in that**
the telecommunications device on which this is based is a telecommunications device which operates in accordance with the DECT Standard.

4. Telecommunications device according to Claim 3,
**characterized in that**
the baseband chip of a telecommunications device which operates in accordance with the DECT Standard is used as the baseband chip for the telecommunications device.

5. Telecommunications device according to one of the preceding claims,
**characterized in that**
the number of slots which the number of TDMA frames handled as a unit comprises in total is a constant irrespective of the number of TDMA frames handled as a unit.

6. Telecommunications device according to one of the preceding claims,
**characterized in that**
the configuration and the extent of the slots are independent of the number of TDMA frames handled as a unit.

7. Telecommunications device according to one of the preceding claims,
**characterized in that**
the time within which a TDMA frame is transmitted is independent of the number of TDMA frames handled as a unit.

8. Telecommunications device according to one of the preceding claims,
**characterized in that**
a frequency divider is provided and is used to divide the frequency of a bit clock which governs the transmission speed.

9. Telecommunications device according to one of the preceding claims,
**characterized in that**
this device is designed for use in the 2.4 GHz ISM band.

## Revendications

1. Système numérique de télécommunication qui présente un poste de base et plusieurs parties mobiles sans fil qui sont en communication ou peuvent entrer en communication avec ce poste de base, les parties mobiles et/ou le poste de base étant conçus pour traiter les données à échanger entre eux comme entités constituées de deux ou plusieurs trames TDMA, les trames TDMA étant constituées de telle sorte que le poste de base peut communiquer successivement avec toutes les parties mobiles en communication avec lui par fenêtres successives d'une trame TDMA particulière,
**caractérisé en ce que**
- le système de télécommunication est un système de télécommunication qui ne travaille pas selon la norme DECT
- et **en ce que** le nombre des fenêtres qui comprend globalement le nombre de trames TDMA traitées comme entités correspond au nombre des fenêtres qui contient une trame unique d'un système qui travaille selon la norme DECT.

2. Système de télécommunication selon la revendication 1, **caractérisé en ce que** ce système est basé sur une modification d'un système de télécommunication dans lequel les données à échanger sont traitées comme entités constituées de différentes trames TDMA.

3. Système de télécommunication selon la revendication 2, **caractérisé en ce que** le système de télécommunication sur lequel il est basé est un système de télécommunication qui travaille selon la norme DECT.

4. Système de télécommunication selon la revendication 3, **caractérisé en ce qu'**il utilise comme puce en bande de base du système de télécommunication la puce en bande de base d'un système de télécommunication qui travaille selon la norme DECT.

5. Système de télécommunication selon l'une des revendications précédentes, **caractérisé en ce que** le nombre des fenêtres qui comprend globalement le nombre de trames TDMA traitées comme entités est une constante indépendante du nombre des trames TDMA traitées comme entités.

6. Système de télécommunication selon l'une des revendications précédentes, **caractérisé en ce que** la structure et l'étendue de la fenêtre sont indépendantes du nombre des trames TDMA traitées comme entités.

7. Système de télécommunication selon l'une des revendications précédentes, **caractérisé en ce que** la durée au cours de laquelle une trame TDMA est transmise est indépendante du nombre des trames TDMA traitées comme entités.

8. Système de télécommunication selon l'une des revendications précédentes, **caractérisé en ce qu'**il contient un diviseur de fréquence qui divise la fréquence d'une cadence de bits qui détermine la vitesse de transfert.

9. Système de télécommunication selon l'une des revendications précédentes, **caractérisé en ce qu'**il est conçu pour être utilisé dans la bande ISM de 2,4 GHz.
